# EUROPEAN PATENT APPLICATION

(11) **EP 4 266 685 A1**
(43) Date of publication of application: **25.10.2023**
(21) Application number: 22169541.4
(22) Date of filing: 22.04.2022
(51) Int. Cl.: H04N 19/426, H04N 19/48, H04N 19/46, H04N 19/124, H04N 19/15, H04N 19/176

(54) **VIDEO ENCODER COMPRISING A FRAME BUFFER ASSEMBLY**

(71) Applicant: intoPIX s.a., 1435 Mont-Saint-Guibert (BE)
(72) Inventor: PELLEGRIN, Pascal, 1435 Mont-Saint-Guibert (BE); DENISON, Thomas, 1435 Mont-Saint-Guibert (BE); BUYSSCHAERT, Charles, 1435 Mont-Saint-Guibert (BE)
(74) Representative: den Braber, Gérard Paul

(57) **Abstract**

A video encoder encodes (100) a sequence of frames (101) so as to obtain an encoded sequence of frames (102) in the following manner. A frame buffer assembly (104) provides, for a present frame to be encoded, a representation (125) of a previously encoded frame. The representation (125) results from lossy compression of a decoded version of the previously encoded frame. An encoding assembly (103) encodes the present frame at least partially with reference to the representation (125) of the previously encoded frame. The video encoder provides a data set comprising the encoded sequence of frames (102). The data set includes, in association with the previously encoded frame, an indication (124) on the lossy compression that has been applied for providing the representation thereof, which has served, at least partially, as a reference for encoding the present frame.

## Description

### FIELD OF THE INVENTION

An aspect of the invention relates to a video encoder comprising a frame buffer assembly. The video encoder may be used, for example, in a camera device for encoding a sequence of frames that has been captured. The camera device may then store the sequence of frames that has been encoded or may send this sequence, which constitutes a video, to another device, or both. Other aspects of the invention relate a method of encoding a sequence of frames, a computer program for a video encoder, a data set comprising an encoded sequence of frames, and a video decoder.

### BACKGROUND ART

There are numerous video encoding techniques that comprise inter-mode encoding. In inter-mode encoding, a frame, or at least a portion thereof, is encoded with reference to one or more previously encoded frames. Generally, a differential representation of a frame portion to be encoded is generated. The differential representation corresponds with a difference between, on the one hand, the frame portion to be encoded and, on the other hand, a reference frame portion that is taken from a decoded version a previously encoded frame. The differential representation thus comprises residues, which are preferably a small as possible for the sake of efficient encoding.

Motion estimation may be carried out to find a frame portion in the decoded version of one or more previously encoded frames that provides the smallest residues when used as the reference frame portion. Motion vector data is then provided indicating the frame portion that has been found as being the best reference for the frame portion to be encoded. Alternatively, motion estimation may be dispensed with. In that case, a given position within a frame may serve as a criterion for designating the reference frame portion that is used in inter-mode encoding.

Inter-mode encoding requires a so-called frame buffer in which the decoded version of one or more previously encoded frames are stored, at least temporarily. In general, the frame buffer is a dedicated memory circuit that provides a sufficiently large memory capacity at acceptable cost. The frame buffer may be, for example, a dynamic random access memory (DRAM). While the cost may be acceptable, the frame buffer may still account for a significant portion of a total cost of a video encoder. This is particularly the case for high-definition video encoders.

What is more, relatively large amounts of data per unit of time need to be written into the frame buffer and need to be read from the frame buffer when video encoding in the inter-mode. This requires a relatively large bandwidth, which may entail a power consumption that is relatively large. Here too, the power consumption required to achieve a sufficiently large bandwidth may account for a significant portion of a total power consumption of a video encoder. Again, this is particularly the case for high-definition video encoders.

Frame buffer compression has been proposed to allow for a smaller frame buffer, which reduces costs, and for relaxing bandwidth requirements, which reduces power consumption. Instead of storing the decoded version of a previously encoded frame in a frame buffer, a compressed version of this decoded version is stored. In general, the frame buffer compression should be mathematically lossless, or at least visually lossless. If not, a present frame portion will be encoded in the inter-mode with respect to a degraded version of what would have been the reference frame portion if no frame buffer compression were used. Frame buffer compression may thus introduce visual artifacts, in particular when several subsequent frames are at least partially encoded in the inter-mode. This is due to error accumulation throughout these frames.

Patent publication WO2019025640A1 describes a frame buffer compression technique that is particularly suited in applications where encoded video data rates are relatively low. In this frame buffer compression technique, a decoded version of an encoded frame is effectively divided into relatively large portions, which are then encoded for storage in the frame buffer. This encoding may be somewhat lossy, which allows achieving a relatively high compression ratio. In principle, such a lossy encoding may affect coding efficiency or image quality, or both. However, it has been found that, when encoded video data rates are relatively low, a loss in coding efficiency or image quality, or both may be relatively small and may even be insignificant. The image quality may be relatively close to what a conventional video encoder can provide, which does not compress reference frames or slightly compresses reference frames in a lossless or quasilossless manner.

### SUMMARY OF THE INVENTION

There is a need for a video encoding technique that allows better overall performance in terms of cost, power consumption and image quality, regardless of video data rates.

An aspect of the invention as defined in claim 1 provides for a video encoder adapted to encode a sequence of frames so as to obtain an encoded sequence of frames, the video encoder comprising:
- a frame buffer assembly adapted to provide, for a present frame to be encoded, a representation of a previously encoded frame, the representation resulting from lossy compression of a decoded version of the previously encoded frame; and
   an encoding assembly adapted to encode the present frame at least partially with reference to the representation of the previously encoded frame;
- the video encoder being arranged to provide a data set comprising the encoded sequence of frames and including, in association with the previously encoded frame, an indication on the lossy compression that has been applied for providing the representation thereof, which has served, at least partially, as a reference for encoding the present frame.

A further aspect of the invention as defined in claim 11, provides for a method of encoding a sequence of frames so as to obtain an encoded sequence of frames, the method comprising:
- providing, for a present frame to be encoded, a representation of a previously encoded frame by lossy compression of a decoded version of the previously encoded frame; and
   encoding the present frame at least partially with reference to the representation of the previously encoded frame;
- providing a data set comprising the encoded sequence of frames and including, in association with the previously encoded frame, an indication on the lossy compression that has been applied for providing the representation thereof, which has served, at least partially, as a reference for encoding the present frame.

A yet further aspect of the invention as defined in claim 12, provides for a computer program for a video encoder, the computer program comprising a set of instructions that enables the video encoder to carry out the method defined hereinbefore.

A yet further aspect of the invention as defined in claim 13, provides for a data set comprising:
- an encoded sequence of frames comprising an encoded frame that has at least partially been encoded with reference to a representation of another previously encoded frame, the representation resulting from lossy compression of a decoded version of the other previously encoded frame; and
- an indication, in association with the other previously encoded frame, on the lossy compression that has been applied for providing the representation thereof, which has served, at least partially, as a reference for encoding the encoded frame.

A yet further aspect of the invention as defined in claim 14, provides for a video decoder adapted to decode a sequence of encoded frames so as to obtain a decoded sequence of frames, the video decoder comprising:
- a frame buffer assembly adapted to provide, for an encoded frame to be decoded, a representation of a previously decoded frame; and
- a decoding assembly adapted to decode the encoded frame at least partially with reference to the representation of the previously decoded frame,
- the video decoder being arranged to retrieve from a data set, which comprises the sequence of encoded frames, an indication contained therein on lossy compression that has been applied by a frame buffer assembly in a video encoder that has produced the sequence of encoded frames; and
- the frame buffer assembly of the decoder being adapted to use the indication that has been retrieved from the data set for processing the previously decoded frame in a manner equivalent to the lossy compression applied by the frame buffer assembly in the video encoder, so as to obtain the representation that serves, at least partially, as a reference for decoding the present frame

In each of these aspects, the indication on the lossy compression allows a decoder to sufficiently accurately reproduce the representation of a previously encoded frame that has served as a reference in inter-mode encoding. This applies even when the representation has been obtained by compressing the previously encoded frame to a relatively great extent. Moreover, this also significantly reduces error accumulation throughout a sequence frames that are at least partially encoded in the inter-mode. A relatively high compression rate may thus be used for frame buffer compression without this significantly impairing image quality. This, in turn, allows significantly reducing the memory capacity that the frame buffer should provide, which reduces costs, and significantly relaxing bandwidth requirements, which reduces power consumption. What is more, the indication on the lossy compression can be provided without this requiring significant resources and processing, which would offset a reduction in cost and in power consumption. The invention thus allows video encoding with better overall performance in terms of cost, power consumption and image quality, regardless of video data rates.

For the purpose of illustration, some embodiments of the invention are described in detail with reference to accompanying drawings. In this description, additional features will be presented, some of which are defined in the dependent claims, and advantages will be apparent.

### BRIEF DESCRIPTION OF THE DRAWINGS

FIG. 1 is a schematic block diagram of a video encoder.
FIG. 2 is a schematic block diagram of a frame buffer assembly in the video encoder.
FIG. 3 is a conceptual diagram of a data set that the video encoder may provide.
FIG. 4 is a schematic block diagram of a video decoder.
FIG. 5 is a schematic block diagram of a frame buffer assembly in the video decoder.
FIG. 6 is a schematic block diagram of an alternative video encoder.
FIG. 7 is a schematic block diagram of a frame buffer assembly in the alternative video encoder.
FIG. 8 is a schematic block diagram of an alternative video decoder.
FIG. 9 is a schematic block diagram of a frame buffer assembly in the alternative video decoder.

### DESCRIPTION OF SOME EMBODIMENTS

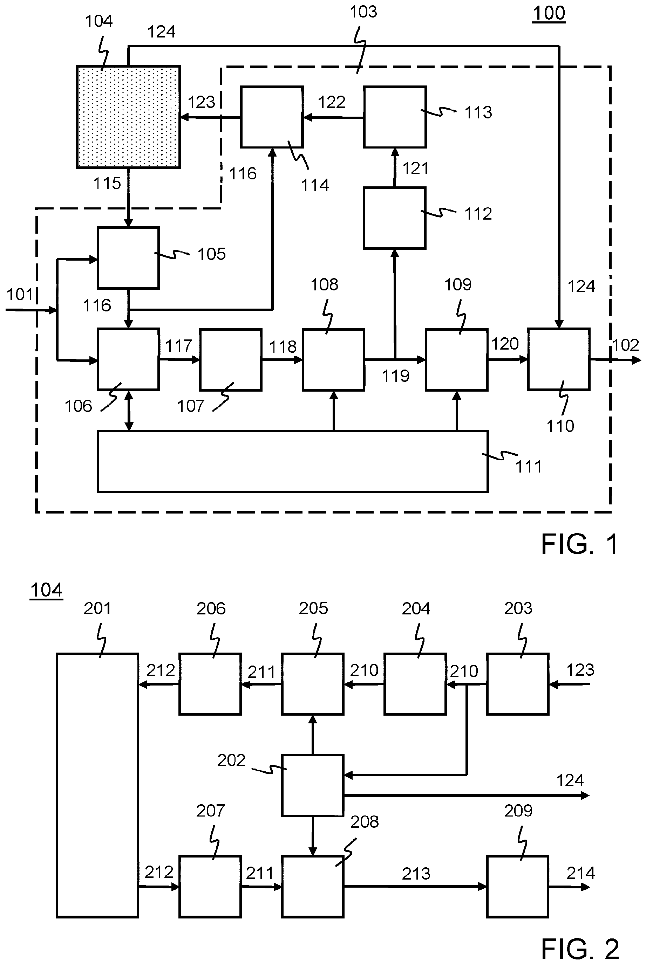

FIG. 1 schematically illustrates a video encoder 100. FIG. 1 provides a schematic block diagram of the video encoder 100. Basically, the video encoder 100 may encode a sequence of frames 101, which may constitute a video, so as to obtain an encoded sequence of frames 102. The encoded sequence of frames 102 may thus constitute an encoded video comprising a smaller amount of data than the video in its original form. The video encoder 100 may thus enable efficient storage of a video by encoding the video, or efficient transfer of the video, or both. The video encoder 100 may be part of a device that can capture a video, such as, for example, a smart phone, adding value to that device due to its efficiency.

The video encoder 100 comprises an encoding assembly 103 and a frame buffer assembly 104. The encoding assembly 103 comprises various functional modules: a motion estimation-and-compensation module 105, an intra/inter-mode application module 106, a decorrelating transform module 107, a quantization module 108, an entropy coding module 109, a data packaging module 110, and a controller 111. The aforementioned modules may carry out encoding-related operations and may thus be regarded as forming an encoding chain 105-111.

The encoding assembly 103 further comprises functional modules that carry out decoding-related operations and that may thus be regarded as forming a decoding chain 112-114: a dequantization module 112, an inverse transform module 113, and a reconstruction module 114. The functional modules 105-114 of the encoding assembly 103 may each be implemented in the form of, for example, dedicated circuits, programmable circuits, or a suitably programmed processor, or any combination of these.

The video encoder 100 basically operates as follows. In effect, the video encoder 100 splits a frame to be encoded into blocks of pixels. A block of pixels constitutes a frame portion, which has a specific position within the frame to be encoded. The video encoder 100 may individually encode respective frame portions that jointly form the frame to be encoded. The frame to be encoded will be referred to hereinafter as the present frame for the sake of convenience and clarity.

A frame portion may be encoded in one of the following two modes: an intra-mode and an inter-mode. In the inter-mode, the frame portion is encoded with reference to a representation 115 of a previously encoded frame. The frame buffer assembly 104 provides the representation 115 of the previously encoded frame. In the intra-mode, the frame portion is encoded without reference to another frame. In this mode, the frame portion may be encoded "as is" or may be encoded with reference to one or more other frame portions of the present frame.

The controller 111 may decide whether the frame portion is encoded in the inter-mode or in the inter-mode. This decision may be made on the basis of a predefined coding scheme. Alternatively, or complementary, the decision may be dynamically made depending on whether the intra-mode or the inter-mode is expected to be more advantageous in terms of, for example, data compression rate or image quality, or both.

In the inter-mode, the motion estimation-and-compensation module 105 searches for a portion 116 in the representation 115 of the previously encoded frame that best approximates a frame portion to be encoded. This best matching frame portion 116 may have a position in the previously encoded frame that is different from the specific position that the frame portion to be encoded has in the present frame. The motion estimation-and-compensation module 105 provides motion vector data that specifies this difference in position. In addition, the motion vector data may specify the previously encoded frame to which the best matching frame portion 116 belongs. This is because the first encoder may search in several previously encoded frames for finding the best matching frame portion 116.

The intra/inter-mode application module 106 provides an intra/inter-defined frame portion 117, which is applied to the decorrelating transform module 107. In the inter-mode, the intra/inter-defined frame portion 117 is a differential representation of the frame portion. The differential representation corresponds with a difference between, on the one hand, the frame portion to be encoded and, on the other hand, the best matching frame portion 116 that the motion estimation-and-compensation module 105 has found. The differential representation comprises residues, which express this difference.

In the intra-mode, the intra/inter-defined frame portion 117 that is applied to decorrelating transform module 107 may simply correspond with the frame portion to be encoded. In that case, the intra/inter-defined frame portion 117 comprises pixels. Alternatively, the intra/inter-mode application module 106 may provide a representation of the frame portion to be encoded, which refers to one or more other portions of the present frame. Such other portion, which may serve as a reference, may be neighboring to the frame portion to be encoded. In this alternative, the intra/inter-defined frame portion 117 may comprise residues.

The decorrelating transform module 107 applies a decorrelating transform to the intra/inter-defined frame portion 117 that is provided by the intra/inter-mode application module 106. Accordingly, the decorrelating transform module 107 provides a transformed intra/inter-defined frame portion 118, which is a representation of the intra/inter-defined frame portion 117 in a transform domain. The transformed intra/interdefined frame portion 118 comprises transform samples, which, in effect, are substitutes for pixels or residues comprised in the intra/inter-defined frame portion 117 that has undergone the decorrelating transform. The decorrelating transform makes that the transform samples in the transformed intra/inter-defined frame portion 118 have an entropy that is generally lower than the pixels or residues comprised in the intra/inter-defined frame portion 117. The decorrelating transform may be in the form of, for example, a discrete cosine transform, commonly designated by the acronym DCT, or a wavelet transform.

The quantization module 108 quantizes the transform samples in the transformed intra/inter-defined frame portion 118. Accordingly, the quantization module 108 provides a quantized version 119 of the transformed intra/inter-defined frame portion 118. Due to quantization of the transform samples, the quantized version 119 may comprise a smaller amount of data than the transformed intra/inter-defined frame portion 118, which is provided by the decorrelating transform module 107 and undergoes the quantization. The quantization thus provides data compression. In principle, this data compression is lossy: the quantization entails loss of information.

The quantization module 108 may quantize a transform sample with a resolution that depends on how much the transform sample affects image quality. The resolution may be relatively high if the transform sample affects image quality to a relatively large extent. Conversely, the resolution may be relatively low if the transform sample affects image quality to a relatively small extent. A transform sample has a certain position in the transformed intra/inter-defined frame portion 118. This position may indicate how much the transform sample affects image quality.

The entropy coding module 109 applies entropy coding to the quantized version 119 of the transformed intra/inter-defined frame portion 118. Accordingly, the entropy coding provides a quantized-and-coded version 120 of the transformed intra/interdefined frame portion 118. Due to the entropy coding, this quantized-and-coded version 120 may comprise a smaller amount of data than the quantized version 119 of the transformed intra/inter-defined frame portion 118. The entropy coding thus provides further data compression. This further data compression may be lossless: the entropy encoding need not entail loss of information, contrary to the quantization. The entropy coding may be based on, for example, a technique that is described in patent publication US9332258.

The controller 111 may control the data compression provided by the quantization in the quantization module 108, as well as at that provided by the entropy coding in the entropy coding module 109. This control may be based on, on the one hand, data comprised in the intra/inter-defined frame portion 117 and, on the other hand, a target amount of data to be comprised in the quantized-and-coded version 120 of the transformed intra/inter-defined frame portion 118. Based on these inputs, the controller 111 may set the resolution of the quantization carried out by the quantization module 108. The controller 111 may further select an entropy coding schema that provides a high level of data compression.

The data packaging module 110 adds the quantized-and-coded version 120 of the transformed intra/inter-defined frame portion 118 to a data set that will constitute the encoded video. The data packaging module 110 may further add an indication whether the intra mode or the inter mode has been applied. In case the frame portion concerned has been encoded in the inter-mode, the data packaging module 110 will further add the motion vector data that the motion estimation-and-compensation module 105 has provided for this frame portion. The data packaging module 110 will further add information on how the quantized-and-coded version 120 of the transformed intra/inter-defined frame portion 118 has been produced. This information may include, for example, information on the resolution of the quantization that has been applied.

Accordingly, the data packaging module 110 composes an encoded frame portion and embeds the encoded frame portion in the data set with information identifying the encoded frame portion. Once the video encoder 100 has encoded all the frame portions of the present frame, the data set will include an encoded version of the present frame, which will be referred to as the encoded present frame. The data packaging module 110 may provide the data set in the form of a data stream that has a specific structure.

As mentioned hereinbefore, the video encoder 100 illustrated in FIG. 1 includes the aforementioned decoding chain 112-114, which comprises the dequantization module 112, the inverse transform module 113, and the reconstruction module 114, The decoding chain 112-114 allows obtaining a decoded version of the present frame that has been encoded within the video encoder 100. The decoding chain 112-114 basically operates as follows.

The dequantization module 112 applies an inverse quantization to the quantized version 119 of the transformed intra/inter-defined frame portion 118. The inverse quantization is an operation that inverses the quantization in the quantization module 108, which coarsely reproduces the aforementioned transform samples. Accordingly, the dequantization module 112 provides a dequantized version 121 of the transformed intra/inter-defined frame portion 118. This dequantized version 121 may be regarded as a coarse representation of the transformed intra/inter-defined frame portion 118 that is provided by the transform coding module in the encoding chain 105-111.

The inverse transform module 113 applies an inverse of the decorrelating transform to the dequantized version 121 of the transformed intra/inter-defined frame portion 118. Accordingly, the inverse transform module 113 provides a decoded version 122 of the intra/inter-defined frame portion 117. The decoded version 122 corresponds to a certain degree with the intra/inter-defined frame portion 117 that is provided by the intra/inter-mode application module 106 in the encoding chain 105-111. In case the resolution of the quantization is relatively high, the decoded version 122 will correspond to a relatively high degree with the aforementioned intra/inter-defined frame portion 117. In an extreme case, where no quantization has been applied, the decoded version 122 will exactly correspond with the intra/inter-defined frame portion 117. Conversely, in case the resolution of the quantization is relatively low, the decoded version 122 will correspond to a relatively low degree with the intra/inter-defined frame portion 117.

The reconstruction module 114 provides a decoded version 123 of the frame portion that has been encoded in the encoding chain 105-111 as described hereinbefore. In case the frame portion has been encoded in the inter-mode, the reconstruction module 114 adds the decoded version 122 of the intra/inter-defined frame portion 117 to the best matching frame portion 116 that has served as a reference. As mentioned hereinbefore, the motion estimation-and-compensation module 105 provides this best matching frame portion 116. The aforementioned addition produces the decoded version 123 of the frame portion, which will be referred to hereinafter as the decoded frame portion 123 for the sake of convenience.

In case the frame portion has been encoded in the intra-mode, the reconstruction module 114 may simply take the decoded version 122 of the intra/interdefined frame portion 117, which is provided by the inverse transform module 113, as the decoded frame portion 123. As mentioned hereinbefore, the intra-mode may allow for a representation of the frame portion with reference to one or more other portions of the present frame. In that case, the reconstruction module 114 may use these references to provide the decoded frame portion 123 on the basis of the decoded version of intra/interdefined frame.

The frame buffer assembly 104 receives the decoded frame portion 123 provided by the reconstruction module 114, which is last in the decoding chain 112-114. Accordingly, once the present frame has been encoded in its entirety, the frame buffer assembly 104 has received respective decoded frame portions, which may all have been obtained as described hereinbefore. The frame buffer assembly 104 has thus received the decoded version of the present frame, which will be referred to as decoded present frame for the sake of convenience. The frame buffer assembly 104 may then provide a representation of the decoded present frame when a subsequent frame is to be encoded at least partially in the inter-mode. This representation may then serve as a reference for coding one or more frame portions of this subsequent frame in the inter-mode.

Up to here, operations have been described that, to a certain extent, may correspond with those carried out by a video encoder complying with for example, one of the following video encoding standards: MPEG-2, MPEG-4, or HEVC. What particularly differentiates the video encoder 100 illustrated in FIG. 1 from the aforementioned video encoder are further operations carried out by the frame buffer assembly 104 and the data packaging module 110. Generally stated, these operations include the following ones.

The frame buffer assembly 104 applies lossy compression to the decoded present frame. This lossy compression provides a compressed version of the decoded present frame. The frame buffer assembly 104 stores this compressed version, at least temporarily. The compressed version of the decoded present frame may then be decompressed later on, which provides a decompressed version of the decoded present frame. This decompressed version then constitutes the representation of the present frame that may be used as a reference for coding one or more frame portions of a subsequent frame in the inter-mode.

In addition, the frame buffer assembly 104 provides an indication 124 on the lossy compression that has been applied. The data packaging module 110 may include this indication 124 in the data set, which comprises the encoded present frame, as well as other encoded frames forming the encoded video.

FIG. 2 illustrates the frame buffer assembly 104 in the video encoder 100. FIG. 2 provides a schematic block diagram of the frame buffer assembly 104. The frame buffer assembly 104 comprises a data memory 201, a controller 202, and various functional modules. These functional modules include a decorrelating transform module 203, a delay buffer 204, a quantization module 205, and an entropy coding module 206. The aforementioned functional modules may be regarded as constituting a buffer compression chain 203-206. The frame buffer assembly 104 further comprises functional modules that may be regarded as constituting a buffer decompression chain 207-209: an entropy decoding module 207, a dequantization module 208, and an inverse transform module 209. The functional modules of the frame buffer assembly 104 may each be implemented in the form of, for example, dedicated circuits, programmable circuits, or a suitably programmed processor, or any combination of these.

For the sake of distinctiveness, the controller 202 in the frame buffer assembly 104 will be referred to hereinafter as the buffer controller 202. For the same reason, the decorrelating transform module 203, the quantization module 205, the entropy coding module 206, the entropy decoding module 207, the dequantization module 208, and the inverse transform module 209, will be referred to hereinafter as the buffer decorrelating transform module 203, the buffer quantization module 205, the buffer entropy encoding module 206, the buffer entropy decoding module 207, the buffer dequantization module 208, and the buffer inverse transform module 209, respectively. The adjective "buffer" has thus been added for the sake of distinctiveness.

The functional modules of the frame buffer assembly 104 may be part of an integrated circuit, which may further include the encoding assembly 103 of the video encoder 100 illustrated in FIG. 1. However, the data memory 201 of the frame buffer assembly 104 may be in the form of a separate circuit, such as, for example, a dynamic random access memory circuit, commonly designated by the acronym DRAM. Such an embodiment may then comprise a data write/read channel through which data may be written into the data memory 201 and through which data may be read from the data memory 201. The data write/read channel, which may comprise a bus, has a bandwidth that sets a limit to the amount of data per unit of time that can be written into the data memory 201 and that can be read from the data memory 201. That is, the bandwidth defines a maximum data rate for reading and writing.

The frame buffer assembly 104 basically operates as follows. It is assumed that the frame buffer assembly 104 receives the decoded frame portion 123, which is provided by the reconstruction module 114 as described hereinbefore. Other decoded frame portions, which may originate from the present frame, as well as from other frames, may be processed in a manner similar to that described hereinafter,

The buffer decorrelating transform module 203 applies a decorrelating transform to the decoded frame portion 123. Accordingly, the buffer decorrelating transform module 203 provides a transformed decoded frame portion 210. The decorrelating transform that the buffer decorrelating transform module 203 applies may be similar to, or may be different from, the decorrelating transform applied by the decorrelating transform module 107 in the encoding assembly 103 of the video encoder 100 illustrated in FIG. 1. In either case, the transformed decoded frame portion 210 comprises transform samples, which, in effect, are substitutes for pixels comprised in the decoded frame portion 123 that has undergone the decorrelating transform. Here too, the latter decorrelating transform makes that the transform samples in the transformed decoded frame portion 210 have an entropy that is generally lower than the pixels in the decoded frame portion 123 as provided by the reconstruction module 114.

The delay buffer 204 may temporarily store the transformed decoded frame portion 210 provided by the buffer decorrelating transform module 203. This temporary storage may contribute to achieving an adequate compression with minimal loss in image quality. This will be explained hereinafter with regard to the buffer controller 202.

The buffer quantization module 205 quantizes the transform samples in the transformed decoded frame portion 210. Accordingly, the buffer quantization module 205 provides a quantization-compressed version 211 of the transformed decoded frame portion 210. Namely, due to quantization of the transform samples, the buffer quantization module 205 provides data compression as explained hereinbefore with regard to the quantization module 108 in the encoding assembly 103. Data is compressed to an extent that depends on a resolution of the quantization that is carried out. The lower the resolution is, the greater the extent to which data is compressed, but also with greater loss of information.

The video encoder 100 is arranged so that lossy compression of the decoded frame portion 123, even to a relatively large extent, need not significantly degrade image quality. This will further be explained hereinafter. Notwithstanding, like the quantization module 108 in the encoding assembly 103, the buffer quantization module 205 may quantize a transform sample with a resolution that depends on how much the transform sample affects image quality.

The buffer entropy coding module 206 applies entropy coding to the quantization-compressed version 211 of the transformed decoded frame portion 210 provided by the buffer quantization module 205. Accordingly, the buffer entropy coding module 206 provides a quantization-and-coding-compressed version 212 of the transformed decoded frame portion 210. Namely, the entropy coding provides data compression as explained hereinbefore with regard to the entropy coding module 109 in the encoding assembly 103. The quantization-and-coding-compressed version 212 of the transformed decoded frame portion 210 will be referred to hereinafter as compressed decoded frame portion 212 for the sake of convenience.

The compressed decoded frame portion 212 is sent to the data memory 201 for storage therein. In the course of encoding the present frame, the buffer compression chain 203-206 successively provides respective compressed decoded frame portions. These successive compressed decoded frame portions, which are sent to the data memory 201, form a memory input data stream. This memory input data stream should preferably not exceed the maximum data rate of the data write/read channel, which is defined by its bandwidth as explained hereinbefore.

The buffer controller 202 may control the resolution of the quantization that the buffer quantization module 205 applies in the buffer compression chain 203-206. This control may be based on, on the one hand, the data comprised in the transformed decoded frame portion 210 and, on the other hand, a target amount of data to be comprised in the compressed decoded frame portion 212. This target amount of data may be related to the maximum data rate of the data write/read channel. For example, the target amount of data may, on average, correspond with this maximum data rate divided by a frequency with which decoded frame portions are provided. The target amount of data may also be somewhat below the aforementioned ratio to have a certain margin. By controlling the resolution of the quantization in this manner, the buffer controller 202 may achieve that the memory input data stream does not exceed the maximum data rate of the data write/read channel, or only occasionally.

The delay buffer 204 allows the buffer controller 202 to control the resolution of the quantization by taking into account a plurality of transformed decoded frame portions, which may be neighboring in position. Some of these portions may be relatively uniform, whereas others may be more complex. Jointly taking into account these different portions, allows controlling the resolution of the quantization so that quantization errors are more uniformly distributed over these portions compared with a control that takes into account only one transformed decoded frame portion, or few transformed decoded frame portions. A more uniform distribution of quantization errors translates into less loss in image quality for a given level of compression.

The buffer controller 202 may provide the indication 124 on the lossy compression that has been applied to the decoded frame portion 123 as described hereinbefore. This indication 124 may be, for example, related to a target to be achieved by the lossy compression. This compression target may correspond with, for example, the aforementioned target amount of data, the maximum data rate that has to be respected, or the bandwidth of the data write/read channel. In that case, the indication 124 may be regarded as an indirect indication on the lossy compression that has been applied.

The compression target that is indicated allows another compression chain to reproduce the lossy compression that has been applied by the buffer compression chain 203-206 in the frame buffer assembly 104 illustrated in FIG. 2. This other compression chain may be similar to the buffer compression chain 203-206. In case the indication 124 on the lossy compression is of a general nature, such as, for example, the maximum data rate that has to be respected, or the bandwidth of the data write/read channel, another entity in the video encoder 100 may provide this indication.

The indication 124 on the lossy compression that the buffer controller 202 provides may also be of the direct nature by specifying the resolution of the quantization. The indication may thus comprise, for example, one or more quantization steps that the buffer quantization module 205 has applied in quantizing the transformed decoded frame portion 210. Different quantization steps may define different resolutions that are applied for different groups of samples in the transformed decoded frame portion 210.

The indication 124 on the lossy compression may be provided individually for each decoded frame portion that is compressed and then written into the data memory 201. Namely, once the decoded frame portion 123 has been compressed and written into the data memory 201, as described hereinbefore, a subsequent decoded frame portion is compressed and written into the data memory 201. This subsequent decoded frame portion then undergoes the decorrelating transform resulting in another transformed decoded frame portion. This other transformed decoded frame portion may comprise a greater or a smaller amount of data. This may make that the resolution of the quantization thereof may be set to a higher level or to a smaller level, respectively. Compression of the subsequent decoded frame portion may thus be less lossy or more lossy than that of the decoded frame portion 123 discussed hereinbefore.

Once the present frame has been encoded, the buffer compression chain 203-206 has compressed the respective decoded frame portions that constitute the decoded present frame. The buffer compression chain 203-206 has thus produced respective compressed decoded frame portions, which have been written into the data memory 201. The respective compressed decoded frame portions constitute the compressed version of the decoded present frame. This compressed version will be referred to hereinafter as compressed decoded present frame. The compressed decoded present frame thus results from the lossy compression in the buffer compression chain 203-206 described hereinbefore.

The buffer decompression chain 207-209 in the frame buffer assembly 104 illustrated in FIG. 2 may decompress the compressed decoded present frame in the following manner. The buffer entropy decoding module 207 receives the compressed decoded frame portion 212 that has previously been written into the data memory 201 and that is now read from the data memory 201. The buffer entropy decoding module 207 applies entropy decoding to the compressed decoded frame portion 212 that has been read. Accordingly, the buffer entropy decoding module 207 may reconstitute the quantization-compressed version 211 of the transformed decoded frame portion 210 that the buffer quantization module 205 previously provided in the buffer compression chain 203-206.

The buffer dequantization module 208 applies an inverse quantization to the quantization-compressed version 211 of the transformed decoded frame portion 210. The inverse quantization is an operation that inverses the quantization in the buffer quantization module 205, which coarsely reproduces the transform samples of the transformed decoded frame portion 210. Accordingly, the buffer dequantization module 208 provides a decompressed version 213 of the transformed decoded frame portion 210 that the buffer decorrelating transform module 203 previously provided in the buffer compression chain 203-206. This decompressed version 213 may be regarded as a coarse representation of the transformed decoded frame portion 210.

The buffer inverse transform module 209 applies an inverse of the decorrelating transform to the decompressed version 213 of the transformed decoded frame portion 210 . Accordingly, the buffer inverse transform module 209 provides a decompressed version 214 of the decoded frame portion 123 that has previously been received by the frame buffer assembly 104 illustrated in FIG. 2 and compressed in the buffer compression chain 203-206 for storage in the data memory 201. The lossy compression therein makes that the decompressed version 214 of the decoded frame portion 123 does not perfectly correspond with the decoded frame portion 123 that has been sent to the frame buffer assembly 104 . The greater the extent to which the decoded frame portion 123 has been compressed, the more lossy the compression generally has been and, as a consequence, the greater the extent to which the decompressed version 214 will differ from the decoded frame portion 123.

Accordingly, the frame buffer assembly 104 may provide respective decompressed versions of respective decoded frame portions that jointly constitute the decompressed version of the decoded present frame. The decompressed version of the decoded present frame, or at least a part thereof, is a representation thereof that may thus serve as a reference for encoding a subsequent frame at least partially in the inter-mode.

The lossy compression may make that the representation of the decoded present frame that constitutes the reference does not perfectly correspond with the decoded present frame. As such, this may degrade image quality of a decoded version of the encoded video that the video encoder 100 produces. This is particularly due to an accumulation of errors when decoding if decoded versions of frames are used as references. However, a video decoder may be able to reproduce the representation that constituted the reference in the video encoder 100 thanks to the indication 124 on the lossy compression that has been applied. This prevents an accumulation of errors that may significantly affect image quality.

As illustrated in FIG. 1, the data packaging module 110 may include the indication 124 on the lossy compression that the frame buffer assembly 104 has applied in the data set, which further includes the encoded video. The data set may have a given structure that provides for inclusion of the indication. The structure may provide a specific location where the indication may be present so that a video decoder may easily retrieve the indication.

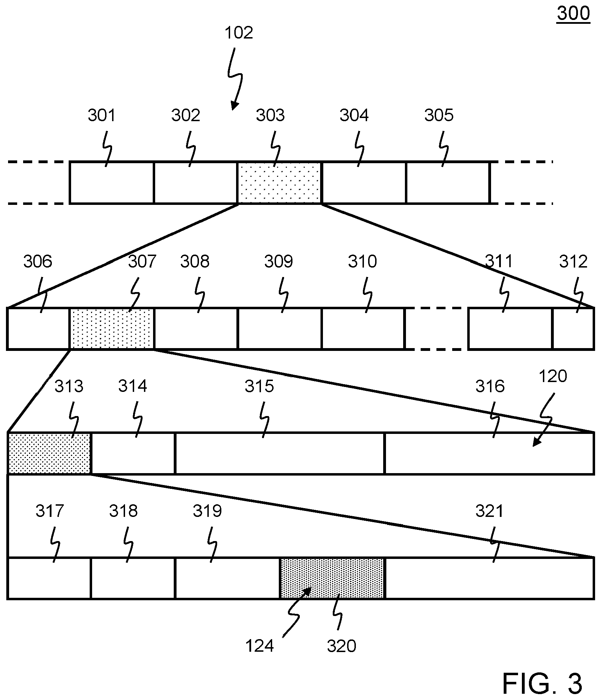

FIG. 3 illustrates a data set 300 that the video encoder 100 may provide. FIG. 3 provides a schematic structure diagram of the data set 300. In this example, the data set 300 may be in the form of a data stream. The data set 300 comprises the encoded sequence of frames 102, which is schematically represented in an uppermost portion of FIG. 3. FIG. 3 represents several encoded frames 301-305 of this sequence, one of which 303 is represented and described in greater detail. This encoded frame 303 will be referred to hereinafter as the described encoded frame 303 for the sake of convenience. The other encoded frames in the encoded sequence of frames 102 may have a structure that is similar to, or even identical to, that of the described encoded frame 303.

It is assumed that the described encoded frame 303 results from encoding the present frame as described hereinbefore with reference to FIGS. 1 and 2. It is further assumed that this encoding has, at least partially, been carried out in the inter-mode. The present frame has thus been encoded with reference to one or more other previously encoded frames. Any of the other encoded frames that are located left to the described encoded frame 303 may constitute an encoded version of a frame that has served as a reference for encoding to present frame. The aforementioned applies to encoded frames 301, 302 represented in FIG. 3. Any of the other encoded frames that are located right to the described encoded frame 303 may be an encoded version of a frame that has been encoded, at least partially, with reference to the present frame. The aforementioned applies to encoded frames 304, 305 represented in FIG. 3.

The described encoded frame 303 comprises several data fields for several types of data 306-312, which are represented in an upper middle portion of FIG. 3. These include a picture header 306, a plurality of encoded frame portions 307-311, and an end-of-picture indicator 312. Each encoded frame portion may have been produced by the video encoder 100 in a manner as described hereinbefore. In principle, one or more encoded frame portions may have been encoded in the inter-mode, and one or more other encoded frame portions may have been encoded in the intra-mode. It is also possible that all the encoded frame portions comprised in the described encoded frame 303 have been encoded in the inter-mode or that all the encoded frame portions have been encoded in the intra-mode. A first encoded frame portion 307 of the described encoded frame 303 will be presented and described in greater detail. The other encoded frame portions 308-311 may have a structure that is similar to, or even identical to, that of the first encoded frame portion 307..

The first encoded frame portion 307 comprises several data fields for several types of data 313-316, which are represented in a lower middle portion of FIG. 3. These include a header 313, a mode indicator 314, reference data 315, and encoded picture data 316. The header 313 may mark a position of the first encoded frame portion 307 in the described encoded frame 303. The header 313 may comprise further information, which will be described hereinafter. The mode indicator 314 indicates whether the first encoded frame portion 307 has been produced by encoding in the inter-mode or in the intra-mode.

In case the encoding has been in the inter-mode, the reference data 315 may comprise the aforementioned motion vector data, which indicates one or more portions of the other frames that have served as a reference. In case the encoding has been in the intra-mode, the reference data 315 may indicate portions in the present frame itself that have been used for this intra-encoding. Alternatively, if no reference is made to other portions in the present frame itself, the reference data 315 may be dispensed with. The encoded picture data 316 comprises the quantized-and-coded version 120 of the transformed intra/interdefined frame portion 118, which is provided by the encoding chain 105-111 in the video encoder 100 as described hereinbefore with reference to FIG. 1.

The header 313 of the first encoded frame portion 307 will be presented and described in greater detail. The other encoded frame portions may comprise a header that has a structure that is similar to, or even identical to, that of the header 313 of the first encoded frame portion 307.

The header 313 comprises several data fields for several types of data 317-321, which are represented in a lowermost portion of FIG. 3. These include a marker 317, a flag field 318, an encoding quantization indication 319, a frame buffer compression indication 320, and packet-size and control data 321. The marker 317 may mark the header 313 with the first encoded frame portion 307. The flag field 318 may comprise one or more flags that may be used for decoding the first encoded frame portion 307. The encoding quantization information 319 may specify one or more quantization steps that have been used in the quantization to obtain the first encoded frame portion 307.

A particular aspect of the header is the frame buffer compression indication 320 comprised therein. The frame buffer compression indication 320 comprises the indication 124 on the lossy compression that the frame buffer assembly 104 has applied for storing the decoded version of the first encoded frame portion 307 in its data memory 201. The frame buffer compression indication 320 thus enables a video decoder to apply this lossy compression too, or at least an approximation thereof, or to reproduce effects of the lossy compression.

In a variant of the data set 300 illustrated in FIG. 3, the picture header 306 may comprises a frame buffer compression indication that, at least partially, provides the indication 124 on the lossy compression that the frame buffer assembly 104 has applied. For example, a fixed level of compression, or a predefined compression scheme, may have been applied by the frame buffer assembly 104 in connection with the described encoded frame 303. In that case, the frame buffer compression indication in the picture header may indicate the fixed level of compression, or the predefined compression scheme. The frame buffer compression indication 320 in the header 313 the first encoded frame portion 307 may then be dispensed with, which then equally applies to respective headers of respective other encoded frame portions that belong to the described encoded frame 303. Alternatively, the frame buffer compression indication in the header of an encoded frame portion may indicate an adjustment with respect to the fixed level of compression, or the predefined compression scheme.

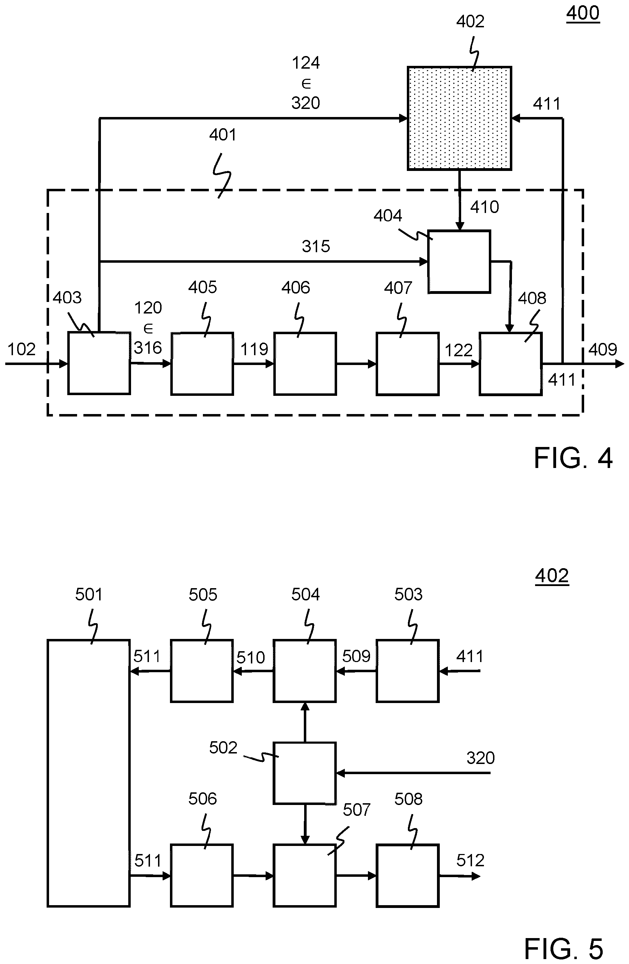

FIG. 4 schematically illustrates a video decoder 400 that is compatible with the video encoder 100 described hereinbefore with reference to FIGS. 1 and 2. FIG. 4 provides a schematic block diagram of the video decoder 400. The video decoder 400 comprises a decoding assembly 401 and a frame buffer assembly 402. The frame buffer assembly 402 will be referred to hereinafter as decoder frame buffer assembly 402 for the sake of distinctiveness. The decoding assembly 401 comprises various functional modules: a data unpackaging module 403, a motion compensation module 404, an entropy decoding module 405, a dequantization module 406, an inverse transform module 407, and a reconstruction module 408. For the sake of distinctiveness, the dequantization module 406, the inverse transform module 407, and the reconstruction module 408, will be referred to hereinafter as decoder dequantization module 406, decoder inverse transform module 407, and decoder reconstruction module 408, respectively. That is, the adjective "decoder" has been added to distinguish the aforementioned modules from corresponding modules in the video encoder 100 illustrated in FIG. 1.

The video decoder 400 basically operates as follows. It is assumed that the video decoder 400 receives the encoded sequence of frames 102 comprised in the data set 300 illustrated in FIG. 3, which has been produced by the video encoder 100 illustrated in FIG. 1. In response, the video decoder 400 provides a decoded sequence of frames 409. The decoded sequence of frames 409 comprises respective decoded frames, a decoded frame being a decoded version of an encoded frame in the encoded sequence of frames 102.

One or more decoded frames are stored, at least temporarily, in the decoder frame buffer assembly 402. The decoder frame buffer assembly 402 may then provide a representation 410 of a previously decoded frame. This representation 410 may serve as a reference for decoding a present encoded frame that, at least partially, has been encoded in the inter-mode.

The decoding assembly 401 in the video decoder 400 may decode the first encoded frame portion 307 in a manner that will now be described. The decoding assembly 401 may decode other frame portions in a similar manner.

The data unpackaging module 403 retrieves various types of data comprised in the first encoded frame portion 307: the encoded picture data 316, the reference data 315, and the frame buffer compression indication 320 comprised in the header 313 as illustrated in FIG. 3. The reference data 315 may indicate whether the intra-mode or the inter-mode has been applied. The reference data 315 comprises motion vector data in case the first encoded frame portion 307 results from encoding in the inter-mode. The encoded picture data 316 comprises the quantized-and-coded version 120 of the transformed intra/inter-defined frame portion 118, which is provided by the encoding chain 105-111 in the video encoder 100 as described hereinbefore with reference to FIG. 1. The frame buffer compression indication 320 comprises the indication 124 on the lossy compression that the frame buffer assembly 104 in the video encoder 100 has applied with respect to the first encoded frame portion 307.

The entropy decoding module 405 applies entropy decoding to the quantized-and-coded version 120 of the transformed intra/inter-defined frame portion 118. The entropy decoding is an inverse of the entropy coding that the entropy coding module 109 in the video encoder 100 has applied. Accordingly, the entropy decoding module 405 reproduces the quantized version 119 of the transformed intra/inter-defined frame portion 118 that the entropy coding module 109 in the video encoder 100 has received. In the video encoder 100, the decoding chain 112-114 has also received the quantized version 119 of the transformed intra/inter-defined frame portion 118. The decoder dequantization module 406 and the decoder inverse transform module 407 carry out operations that correspond with those carried out by the dequantization module 112 and the inverse transform module 113, respectively, in the decoding chain 112-114 in the video encoder 100. Accordingly, the decoder inverse transform module 407 provides the decoded version 122 of the intra/inter-defined frame portion 117.

In case the first encoded frame portion 307 results from encoding in the inter-mode, the motion compensation module 404 receives the motion vector data that is comprised in the reference data 315. The motion vector data indicates a particular portion of a previously decoded frame that has served as a reference for the encoding in the inter-mode. The motion compensation module 404 retrieves this particular portion from the representation 410 of the previously decoded frame that decoder frame buffer assembly 402 provides. The decoder reconstruction module 408 adds the decoded version 122 of the intra/inter-defined frame portion 117 to the particular portion of the representation of the previously decoded frame, which the motion compensation module 404 has retrieved from the decoder frame buffer assembly 402. This addition produces a decoded frame portion 411.

Ideally, the representation 410 of the previously decoded frame provided by the decoder frame buffer assembly 402 corresponds exactly with the representation 115 that has been provided by the frame buffer assembly 104 in the video encoder 100. That is, ideally, the video decoder 400 uses a reference that exactly corresponds with the reference that has been used in the video encoder 100. In that case, the decoded frame portion 411 that the decoder reconstruction module 408 provides exactly corresponds with the decoded frame portion 123 that the reconstruction module 114 in the video encoder 100 has provided for the frame portion concerned.

Let it now be assumed that the reference used by the video decoder 400 for the frame portion concerned differs from the reference that has been used by the video encoder 100. In that case, the decoded frame portion 411 that the decoder reconstruction module 408 provides differs from the decoded frame portion 123 that the reconstruction module 114 in the video encoder 100 has provided for the frame portion concerned. The latter decoded frame portion 123 may, in its turn, have served as a reference for encoding a subsequent frame portion belonging to a subsequent frame in the inter-mode. This generally makes that there will be a greater difference between the reference used by the video decoder 400 and the reference that has been used by the video encoder 100 for this subsequent frame portion belonging to the subsequent frame. Thus, a difference between references used in the video encoder 100 and in the video decoder 400 may grow throughout the successive frames. This is an accumulation of errors that degrades image quality.

The frame buffer compression indication 320 enables the decoder frame buffer assembly 402 to provide a reference that closely matches with that provided by the frame buffer assembly 104 in the video encoder 100. The indication may even enable the decoder frame buffer assembly 402 to exactly reproduce the reference provided by the frame buffer assembly 104 in the video encoder 100. Accordingly, the frame buffer compression indication 320 allows reducing an accumulation of errors, and may even prevent an accumulation of errors, which otherwise would occur due to the data compression in the frame buffer assembly 104 in the video encoder 100. The decoder frame buffer assembly 402 may apply the same data compression for at least temporary storage of decoded frames. Alternatively, the decoder frame buffer assembly 402 may store the decoded frames without compressing these, but process the decoded frames in a manner that imitates the data compression applied in the frame buffer assembly 104 of the video encoder 100.

FIG. 5 schematically illustrates an embodiment of the decoder frame buffer assembly 402. FIG. 5 provides a schematic block diagram of this embodiment, which will be referred to hereinafter as the decoder frame buffer assembly 402 for the sake of convenience. The decoder frame buffer assembly 402 comprises a data memory 501 and a controller 502, which will be referred to hereinafter as decoder buffer data memory 501 and decoder buffer controller 502, respectively, for the sake of distinctiveness.

Like the frame buffer assembly 104 in the video encoder 100, the decoder frame buffer assembly 402 comprises various functional modules that may be regarded as constituting a buffer compression chain 503-505. These functional modules include a decorrelating transform module 503, a quantization module 504, and an entropy coding module 505. These will be referred to hereinafter as decoder buffer decorrelating transform module 503, decoder buffer quantization module 504, and decoder buffer entropy coding module 505, respectively, for the sake of distinctiveness. For the same reason, the buffer compression chain 503-505 in the decoder frame buffer assembly 402 will be referred to hereinafter as decoder buffer compression chain 503-505.

The decoder frame buffer assembly 402 further comprises functional modules that may be regarded as constituting a buffer decompression chain 506-508: an entropy decoding module 506, a dequantization module 507, and an inverse transform module 508. These will be referred to hereinafter as the decoder buffer entropy decoding module 506, the decoder buffer dequantization module 507, and the decoder buffer inverse transform module 508, respectively, for the sake of distinctiveness. For the same reason, the buffer decompression chain 506-508 in the decoder frame buffer assembly 402 will be referred to hereinafter as the decoder buffer decompression chain 506-508. The functional modules in the decoder buffer compression chain 503-505 and in the decoder buffer decompression chain 506-508 may each be implemented in the form of, for example, dedicated circuits, programmable circuits, or a suitably programmed processor, or any combination of these.

The decoder frame buffer assembly 402 basically operates as follows. It is assumed that the decoder frame buffer assembly 402 receives the decoded frame portion 411, which is provided by the decoder reconstruction module 408 as described hereinbefore with reference to FIG. 4. Other decoded frame portions, which result from decoding other encoded frame portions, may be processed in a manner similar to that described hereinafter.

The decoder buffer controller 502 receives the frame buffer compression indication 320 that is included in the first encoded frame portion 307, as illustrated in FIG. 3. The decoder buffer controller 502 controls the decoder buffer quantization module 504 so that this module applies a quantization that is similar to the quantization in the buffer quantization module 205 of the frame buffer assembly 104 illustrated in FIG. 2. In case the frame buffer compression indication 320 specifies one or more quantization steps that have been applied, the decoder buffer quantization module 504 may directly apply these quantization steps too. As mentioned hereinbefore, the frame buffer compression indication 320 may indicate a target that was to be achieved by the lossy compression in the frame buffer assembly 104 in the video encoder 100. In that case, the decoder buffer controller 502 uses this target to control the quantization in the decoder buffer quantization module 504 so as to reproduce, or imitate, the quantization in the buffer quantization module 205 of the frame buffer assembly 104 in the video encoder 100.

The decoder buffer decorrelating transform module 503 and the decoder buffer entropy coding module 505 may carry out operations similar to those carried out by the buffer decorrelating transform module 203 and the buffer entropy coding module 206, respectively, in the frame buffer assembly 104 in the video encoder 100. Accordingly, the decoder buffer decorrelating transform module 503 may apply the decorrelating transform applied by the buffer decorrelating transform module 203. The decoder buffer decorrelating transform module 503 applies this decorrelating transform to the decoded frame portion 411 provided by the decoder reconstruction module 408 so as to obtain a transformed decoded frame portion 509. The transformed decoded frame portion 509 then undergoes the quantization in the decoder buffer quantization module 504 as described hereinbefore.

The decoder buffer entropy coding module 505 applies entropy coding to a quantization-compressed version 510 of the transformed decoded frame portion 509 provided by the decoder buffer quantization module 504. This entropy coding may be similar to that applied by the buffer entropy coding module 206 in the frame buffer assembly 104 illustrated in FIG. 2. A different entropy coding may also be applied. The decoder buffer entropy coding module 505 thus provides a quantization-and-coding-compressed version 511 of the transformed decoded frame portion 509 provided by the decoder buffer decorrelating transform module 503.

The quantization-and-coding-compressed version 511 of the transformed decoded frame portion 509 provided by the decoder buffer compression chain 503-505 corresponds closely, or even exactly, with the compressed decoded frame portion 212 that has been provided by the buffer compression chain 203-206 in the frame buffer assembly 104 in the video encoder 100. This is thanks to the frame buffer compression indication 320 enabling the quantization in the decoder buffer compression chain 503-505 to closely, or even exactly, correspond with the quantization that has been applied in the buffer compression chain 203-206 in the frame buffer assembly 104 in the video encoder 100. The quantization-and-coding-compressed version 511 of the transformed decoded frame portion 509 provided by the decoder buffer compression chain 503-505 will therefore be referred to hereinafter as similarly compressed decoded frame portion 511. The similarly compressed decoded frame portion 511 is sent to the decoder buffer data memory 501 for storage therein.

The decoder buffer decompression chain 506-508 in the decoder frame buffer assembly 402 illustrated in FIG. 5 may carry out operations similar to those carried out by the buffer decompression chain 207-209 in the frame buffer assembly 104 illustrated in FIG. 2. The decoder frame buffer assembly 402 may thus provide a decompressed version 512 of the decoded frame portion 411 that has been provided by the decoder reconstruction module 408 illustrated in FIG. 4 and compressed in the decoder buffer compression chain 503-505 for storage in the decoder buffer data memory 501.

The decompressed version 512 of the decoded frame portion 411 corresponds closely, or even exactly, with the decompressed version 214 of the decoded frame portion 123 that has been provided by the frame buffer assembly 104 illustrated in FIG. 2. Again, this is thanks to the frame buffer compression indication 320 enabling the quantization, as well as the inverse quantization, in the decoder frame buffer assembly 402 to correspond closely, or even exactly, with the quantization, as well as the inverse quantization, in the frame buffer assembly 104 in the video encoder 100.

Accordingly, the decoder frame buffer assembly 402 may provide respective decompressed versions of respective previously decoded frame portions that jointly constitute a decompressed version of a previously decoded frame. This decompressed version constitutes the representation 410 of the previously decoded frame that may serve, at least partially, as the reference for decoding a present encoded frame, which has been encoded in the inter-mode, at least partially. This reference may correspond closely, or even exactly, with the reference that has been used in the video encoder 100 for producing the present encoded frame.

The embodiment described hereinbefore is an example of the frame buffer compression indication 320 enabling references in the video decoder 400 to correspond with those that have been used in the video encoder 100. Thanks to this, the references can be compressed to a relatively great extent, at least in the video encoder 100, while ensuring satisfactory image quality. In turn, this allows a reduction in an amount of data that needs to temporarily stored, as well as a reduction in bandwidth required to write and to read the data to be temporarily stored. This, in turn, translates into a reduction in cost and power consumption.

As indicated hereinbefore, the frame buffer compression indication 320 may be a direct nature, specifying the resolution of the quantization that the frame buffer assembly 104 in the video encoder 100 has applied. The frame buffer compression indication 320 may thus comprise, for example, one or more quantization steps that the buffer quantization module 205 has applied in quantizing the transformed decoded frame portion concerned. An advantage of such a direct specification of quantization resolution in frame buffer compression is that the decoder frame buffer assembly 402 need not derive the resolution of quantization from an indirect indication of compression, such as, for example, a compression target as mentioned hereinbefore. Thus, directly specifying the resolution of the quantization allows a relatively simple implementation of the decoder frame buffer assembly 402 and thus allows a cost-efficient implementation of the video decoder 400. This also applies to embodiments different from those described hereinbefore with reference to FIGS. 1, 2, 4, and 5.

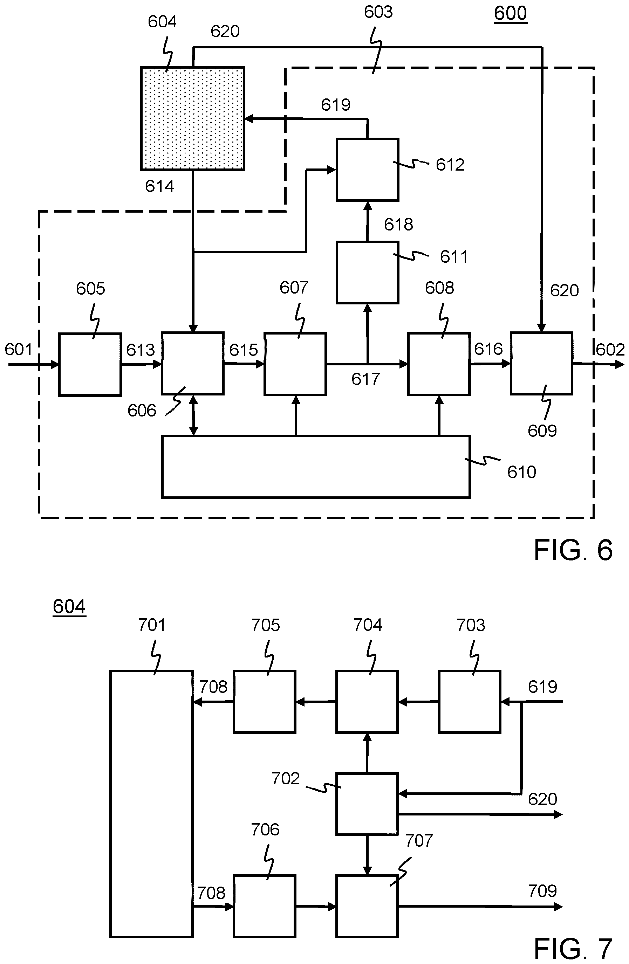

FIG. 6 illustrates an alternative video encoder 600. FIG. 6 provides a schematic block diagram of the alternative video encoder 600. Like the video encoder 100 illustrated in FIG. 1, the alternative video encoder 600 may encode a sequence of frames 601, which may constitute a video, so as to obtain an encoded sequence of frames 602. The encoded sequence of frames 602 may thus constitute an encoded video comprising a smaller amount of data than the video in its original form. The alternative video encoder 600 may thus also enable efficient storage of a video by encoding the video, or efficient transfer of the video, or both. The alternative video encoder 600 may be part of a device that can capture a video, such as, for example, a smart phone, adding value to that device due to its efficiency.

The alternative video encoder 600 comprises an alternative encoding assembly 603 and an alternative frame buffer assembly 604. The alternative encoding assembly 603 comprises various functional modules: a linear transform module 605, an alternative intra/inter-mode application module 606, a quantization module 607, an entropy coding module 608, a data packaging module 609, and a controller 610. The aforementioned modules may carry out encoding-related operations and may thus be regarded as forming an encoding chain 605-610. The alternative encoding assembly 603 further comprises functional modules that carry out decoding-related operations and that may thus be regarded as forming a decoding chain 611-612: a dequantization module 611 and an alternative reconstruction module 612. The functional modules of the alternative encoding assembly 603 may each be implemented in the form of, for example, dedicated circuits, programmable circuits, or a suitably programmed processor, or any combination of these.

The alternative video encoder 600 basically operates as follows. The alternative encoding assembly 603 may operate in a manner similar to that described in patent publication WO 2020/249790. In summary, the linear transform module 605 applies a linear transform to a present frame that is to be encoded. The linear transform thus provides the present frame in a transform domain 613. The linear transform may be a decorrelating transform such as, for example, a discrete cosine transform, commonly designated by the acronym DCT, or a wavelet transform. The linear transform may also be a combination of such a transform and a color transform, such as, for example, a conversion of a frame composed of color pixels, such as, red, green, and blue, into a frame composed of a luminance component and two types of chrominance components. The color transform is generally carried out first.

In effect, the alternative encoding assembly 603 may split the present frame in the transform domain 613 into blocks of transform samples. A block of transform samples constitutes a portion of the present frame in the transform domain 613, which has a specific position within the present frame in the transform domain 613. Such a portion of the present frame in the transform domain 613, as well as such portions of other frames in the transform domain, will be referred to hereinafter as transform domain frame portion for the sake of convenience. The alternative encoding assembly 603 may individually encode respective transform domain frame portions that jointly constitute the present frame in the transform domain 613 in the following manner.

A transform domain frame portion may be encoded in an intra-mode or in an inter-mode, which are basically similar to the intra-mode and the inter-mode, respectively, discussed hereinbefore with respect to the video encoder 100 illustrated in FIG. 1. In the inter-mode, the transform domain frame portion is encoded with reference to a representation 614 of a previously encoded frame in the transform domain. The alternative frame buffer assembly 604 provides the representation 614 of the previously encoded frame in the transform domain 613. In the intra-mode, the transform domain frame portion is encoded without reference to another frame. In this mode, the transform domain frame portion may be encoded "as is".

The controller 610 may decide whether the transform domain frame portion is encoded in the intra-mode or in the inter-mode. The aforementioned patent publication WO 2020/249790 describes a technique for making this decision. Basically, the decision is based on two criteria. A first criterion is whether the intra-mode or the inter-mode is expected to be more advantageous in terms of, for example, data compression rate or image quality, or both. A second criterion applies when the inter-mode is expected to be more advantageous. The second criterion concerns respective corresponding transform domain frame portions belonging immediately preceding frames. The adjective "corresponding" designates a transform domain frame portion that has a position in a preceding frame in the transform domain that corresponds with that of the transform domain frame portion concerned in the present frame in the transform domain 613.

The second criterion is that all the respective corresponding transform domain frame portions belonging immediately preceding frames have been encoded in the inter-mode and their number has reached a threshold. If the second criterion is not met, the decision is based on the first criterion described hereinbefore. However, if the second criterion is met, the transform domain portion is encoded in the intra-mode irrespective of the first criterion. That is, the intra-mode is forcibly applied if the second criterion is met even when the inter-mode is expected to be more advantageous.

In fact, the second criterion constitutes a refresh mechanism, which ensures a reasonable delay between when decoding of the encoded video starts and when properly decoded video starts to be produced. Such a refresh mechanism may also be applied in video encoders other than the alternative video encoder 600 illustrated in FIG. 6. For example, the controller 610 in the video encoder 100 illustrated in FIG. 1 may apply a refresh mechanism as described hereinbefore.

The alternative intra/inter-mode application module 606 provides an intra/inter-defined transform domain frame portion 615, which is applied to the quantization module 607. In the intra-mode, the intra/inter-defined transform domain frame portion 615 may simply correspond with the transform domain frame portion, which forms part of the present frame in the transform domain 613. In that case, the intra/inter-defined transform domain frame portion 615 comprises transform samples, which are also present in the present frame in the transform domain 613.

In the inter-mode, the intra/inter-defined transform domain frame portion 615 is a differential representation of the transform domain frame portion. The differential representation corresponds with a difference between, on the one hand, the transform domain frame portion, which belongs to the present frame, and, on the other hand, a corresponding portion in the representation 614 of the previously encoded frame in the transform domain, which is provided by the alternative frame buffer assembly 604. Here too, the adjective "corresponding" designates correspondence in position. The differential representation of the transform domain frame portion comprises residues, which express the aforementioned difference in the transform domain.

The quantization module 607 and the entropy coding module 608 may jointly be regarded as forming a data compression module, which compresses data comprised in the intra/inter-defined transform domain frame portion 615. The quantization module 607 and the entropy coding module 608 may operate in a manner similar to that described hereinbefore with regard to the quantization module 108 and the entropy coding module 109, respectively, in the video encoder 100 illustrated in FIG. 1. The controller 610 may control the quantization module 607 and the entropy coding module 608 in a manner similar to that described hereinbefore with regard to the controller 111 in the video encoder 100 illustrated in FIG. 1. Accordingly, the entropy coding module 608 provides a quantized-and-encoded version 616 of the intra/inter-defined transform domain frame portion 615, which may comprise an amount of data that may be close to a target amount of data.

The data packaging module 609 may operate in a manner similar to that described hereinbefore with regard to the data packaging module 110 in the video encoder 100 illustrated in FIG. 1. Accordingly, the data packaging module 609 may provide an encoded transform domain frame portion that includes the quantized-and-encoded version 616 of the intra/inter-defined transform domain frame portion 615, which has been obtained as described hereinbefore. The encoded transform domain frame portion may further comprise a mode indication that indicates whether the transform domain frame portion concerned has been encoded in the intra mode or in the inter mode. The encoded transform domain frame portion may yet further comprise information on how the intra/inter-defined transform domain frame portion 615 has been produced. This information may include, for example, information on a resolution of quantization that has been applied.

As mentioned hereinbefore, the alternative video encoder 600 illustrated in FIG. 6 includes the aforementioned decoding chain 611-612, which comprises the dequantization module 611 and the alternative reconstruction module 612, The decoding chain 611-612 allows obtaining a decoded version of the present frame in the transform domain 613, which has been encoded within the alternative video encoder 600. The decoding chain 611-612 basically operates as follows.

The dequantization module 611 applies an inverse quantization to a quantized version 617 of the intra/inter-defined transform domain frame portion 615 provided by the quantization module 607 in the encoding chain 605-610. The inverse quantization is an operation that inverses a quantization in the quantization module 607. Accordingly, the dequantization module 611 provides a dequantized version 618 of the intra/inter-defined transform domain frame portion 615. This dequantized version 618 may be regarded as a coarse representation of the intra/inter-defined transform domain frame portion 615 that is provided by the alternative intra/inter-mode application module 606 in the encoding chain 605-610.

The alternative reconstruction module 612 provides a decoded version 619 of the transform domain frame portion belonging to the present frame, which has been encoded in the encoding chain 605-610 as described hereinbefore. In case the inter-mode has been applied for the transform domain frame portion, the alternative reconstruction module 612 adds the dequantized version 618 of the intra/inter-defined transform domain frame portion 615 to the corresponding portion in the representation 614 of the previously encoded frame in the transform domain that has served as a reference. This addition produces the decoded version 619 of the transform domain frame portion, which will be referred to hereinafter as the decoded transform domain frame portion 619 for the sake of convenience. In case the intra-mode has been applied for the transform domain frame portion, the alternative reconstruction module 612 may simply take the dequantized version 618 of the intra/inter-defined transform domain frame portion 615 as the decoded transform domain frame portion 619.

The alternative frame buffer assembly 604 receives the decoded transform domain frame portion 619 provided by the alternative reconstruction module 612, which is last in the decoding chain 611-612. Accordingly, once the present frame has been encoded in its entirety, the alternative frame buffer assembly 604 has received respective decoded transform domain frame portions, which may all have been obtained as described hereinbefore. The alternative frame buffer assembly 604 has thus received the decoded version of the present frame in the transform domain 613, which will be referred to as decoded present frame in the transform domain for the sake of convenience. The alternative frame buffer assembly 604 may then provide a representation of the decoded present frame in the transform domain when a subsequent frame is to be encoded at least partially in the inter-mode. This representation may then serve as a reference for coding one or more transform domain frame portions belonging to this subsequent frame in the inter-mode.

Like the frame buffer assembly 104 in the video encoder 100 illustrated in FIG. 1, the alternative frame buffer assembly 604 applies lossy compression. In the alternative video encoder 600, lossy compression is applied to the decoded present frame in the transform domain. This lossy compression provides a compressed version of the decoded present frame in the transform domain. The alternative frame buffer assembly 604 stores this compressed version, at least temporarily. The compressed version of the decoded present frame in the transform domain may then be decompressed later on, which provides a decompressed version of the decoded present frame in the transform domain. This decompressed version then constitutes the representation of the present frame in the transform domain 613, that may be used as a reference for coding one or more transform domain frame portions belonging to a subsequent frame in the inter-mode.

Like the frame buffer assembly in the video encoder 100 illustrated in FIG. 1, the alternative frame buffer assembly 604 provides an indication 620 on the lossy compression that has been applied. The data packaging module 609 may include this indication 620 in the data set, which comprises the encoded present frame, as well as other encoded frames forming the encoded video.

FIG. 7 illustrates the alternative frame buffer assembly 604 in the alternative video encoder 600. FIG. 7 provides a schematic block diagram of the alternative frame buffer assembly 604 in the alternative video encoder 600. The alternative frame buffer assembly 604 comprises a data memory 701, a controller 702, and various functional modules 703-707. These functional modules include a delay buffer 703, a quantization module 704, and an entropy coding module 705. The aforementioned functional modules may be regarded as constituting a buffer compression chain 703-705. This buffer compression chain 703-705 is simpler than that in the frame buffer assembly 104 illustrated in FIG. 2 in the sense that the buffer compression chain 703-705 in the alternative frame buffer assembly 604 need not comprise a decorrelating transform module.

The alternative frame buffer assembly 604 further comprises functional modules that may be regarded as constituting a buffer decompression chain 706-707: an entropy decoding module 706 and a dequantization module 707. This buffer decompression chain 706-707 is simpler than that in the frame buffer assembly 104 illustrated in FIG. 2 in the sense that the buffer decompression chain 706-707 in the alternative frame buffer assembly 604 need not comprise an inverse transform module. This is because the alternative video encoder 600 applies the inter-mode in the transform domain. The alternative frame buffer assembly 604, although being simpler, may thus achieve a buffer compression efficiency similar to that of the frame buffer assembly 104 in the video encoder 100. The functional modules of the alternative frame buffer assembly 604 may each be implemented in the form of, for example, dedicated circuits, programmable circuits, or a suitably programmed processor, or any combination of these.

For the sake of distinctiveness, the controller 702 in the alternative frame buffer assembly 604 will be referred to hereinafter as the buffer controller 702. For the same reason, the quantization module 704, the entropy coding module 705, the entropy decoding module 706, and the dequantization module 707, will be referred to hereinafter as the buffer quantization module 704, the buffer entropy coding module 705, and the buffer dequantization module 707, respectively. The adjective "buffer" has thus been added for the sake of distinctiveness.

Like for the frame buffer assembly illustrated in FIG. 2, the functional modules of the alternative frame buffer assembly 604 may be part of an integrated circuit, which may further include the alternative encoding assembly 603 of the alternative video encoder 600 illustrated in FIG. 6. However, the data memory 701 of the alternative frame buffer assembly 604 may be in the form of a separate circuit, such as, for example, a dynamic random access memory circuit, commonly designated by the acronym DRAM Such an embodiment may then comprise a data write/read channel through which data may be written into the data memory 701 and through which data may be read from the data memory 701. The data write/read channel, which may comprise a bus, has a bandwidth that sets a limit to the amount of data per unit of time that can be written into the data memory 701 and that can be read from the data memory 701. That is, the bandwidth defines a maximum data rate for reading and writing.

The alternative frame buffer assembly 604 basically operates as follows. It is assumed that the alternative frame buffer assembly 604 receives the decoded transform domain frame portion 619, which is provided by the alternative reconstruction module 612 as described hereinbefore. Other decoded frame portions in the transform domain, which may belong to the present frame, as well as to other frames, may be processed in a manner similar to that described hereinafter.

The buffer compression chain 703-705 in the alternative frame buffer assembly 604 may operate in a manner similar to that described hereinbefore with regard to the delay buffer 204, the buffer quantization module 205, and the buffer entropy coding module 206 in the compression chain 203-206 in the frame buffer assembly 104 illustrated in FIG. 2. Accordingly, the buffer compression chain 703-705 provides a compressed decoded transform domain frame portion 708. The buffer controller 702 may control the buffer quantization module 704 in a manner similar to that described hereinbefore with regard to the buffer controller 202 in the frame buffer assembly 104 illustrated in FIG. 2. The buffer controller 702 may thus provide the indication 620 on the lossy compression that has been applied to the decoded transform domain frame portion 619 so as to obtain the compressed version thereof.

Once the present frame has been encoded, the buffer compression chain 703-705 has compressed the respective decoded frame portions in the transform domain that constitute the decoded present frame in the transform domain. The buffer compression chain 703-705 has thus produced respective compressed decoded frame portions in the transform domain, which have been written into the data memory 701. The respective compressed decoded frame portions constitute the compressed version of the decoded present frame in the transform domain. This compressed version will be referred to hereinafter as compressed decoded present frame in the transform domain. The compressed decoded present frame in the transform domain thus results from the lossy compression in the buffer compression chain 703-705 described hereinbefore.

The buffer decompression chain 706-707 in the alternative frame buffer assembly 604 may decompress the compressed decoded present frame in the transform domain so as to provide the representation of the present frame in the transform domain. This representation may be used as a reference for coding one or more transform domain frame portions belonging to a subsequent frame in the inter-mode. The buffer decompression chain 706-707 may operate in a manner similar to that described hereinbefore with regard to the buffer entropy decoding module 207 and buffer dequantization module 208 in the frame buffer assembly 104 illustrated in FIG. 2. Thus, the buffer decompression chain 706-707 may provide a decompressed decoded transform domain frame portion 709 on the basis of the compressed decoded transform domain frame portion 708 that has been stored in the data memory 701.

As illustrated in FIG. 6, the data packaging module 609 may include the indication 620 on the lossy compression that the alternative frame buffer assembly 604 has applied in the data set, which further includes the encoded video. The data set may have a given structure that provides for inclusion of this indication 620, which will be referred to hereinafter as frame buffer compression indication 620 for the sake of convenience. The structure of the data set may be similar to that of the data set 300 illustrated in FIG. 3. This structure provides one or more specific locations where the frame buffer compression indication 620 may be present so that a video decoder may easily retrieve the indication.

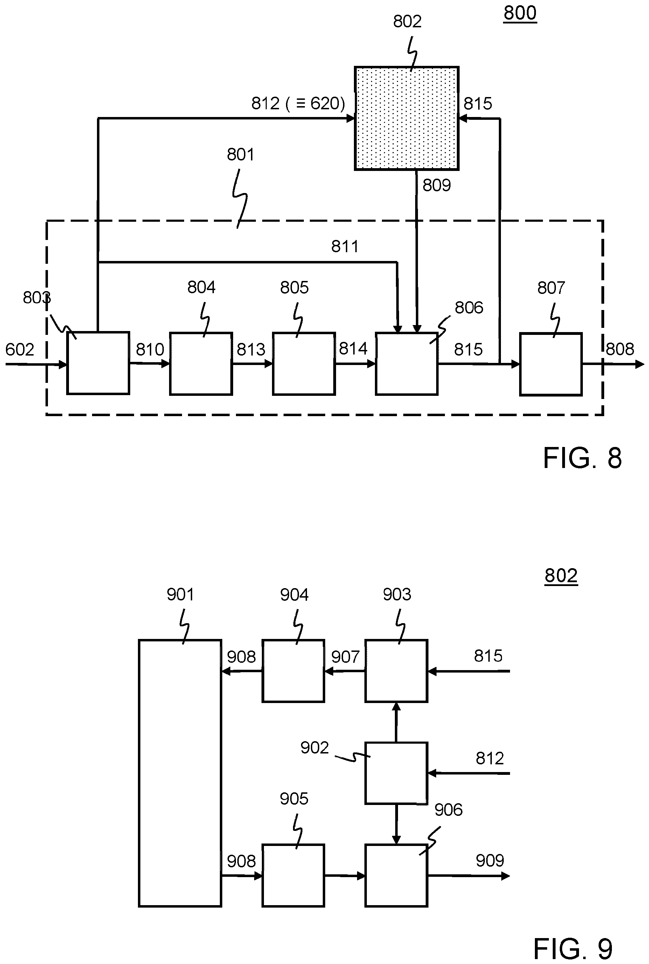

FIG. 8 illustrates an alternative video decoder 800 that is compatible with the alternative video encoder 600 illustrated in FIG. 6. FIG. 8 provides a schematic block diagram of the alternative video decoder 800. The alternative video decoder 800 comprises an alternative decoding assembly 801 and an alternative frame buffer assembly 802. The alternative frame buffer assembly 802 will be referred to hereinafter as alternative decoder frame buffer assembly 802 for the sake of distinctiveness. The alternative decoding assembly 801 comprises various functional modules: a data unpackaging module 803, an entropy decoding module 804, a dequantization module 805, an alternative reconstruction module 806, and an inverse transform module 807. For the sake of distinctiveness, the entropy decoding module 804, the dequantization module 805, and the alternative reconstruction module 806 will be referred to hereinafter as the decoder entropy decoding module 804, the decoder dequantization module 805, and the alternative decoder reconstruction module 806, respectively. That is, the adjective "decoder" has been added to distinguish the aforementioned modules from corresponding modules in the alternative video encoder 600 illustrated in FIG. 6.

The alternative video decoder 800 basically operates as follows. It is assumed that the alternative video decoder 800 receives the encoded sequence of frames 602 that has been produced by the alternative video encoder 600 illustrated in FIG. 6. In response, the alternative video decoder 800 provides a decoded sequence of frames 808. The decoded sequence of frames 808 comprises respective decoded frames, a decoded frame being a decoded version of an encoded frame produced by the alternative video encoder 600 illustrated in FIG. 6. In providing a decoded frame, the alternative video decoder 800 also internally produces the decoded frame in the transform domain.

One or more decoded frames in the transform domain are stored, at least temporarily, in the alternative decoder frame buffer assembly 802. The alternative decoder frame buffer assembly 802 may then provide a representation 809 of a previously decoded frame in the transform domain. This representation 809 may serve as a reference for decoding a present encoded frame that, at least partially, has been encoded in the inter-mode.

The alternative video decoder 800 may decode an encoded frame by successively decoding respective encoded transform domain frame portions that constitute the encoded frame. The respective encoded transform domain frame portions results from encoding respective transform domain frame portions in the alternative video encoder 600 as described hereinbefore with reference to FIGS. 6 and 7.

The alternative decoding assembly 801 may decode an encoded transform domain frame portion in the following manner. The data unpackaging module 803 retrieves various types of data from the encoded transform domain frame portion. Accordingly, the data unpackaging module 803 provides a quantized-and-encoded version 810 of an intra/inter-defined transform domain frame that is comprised in the encoded transform domain frame portion. The data unpackaging module 803 further provides a mode indication 811 and a frame buffer compression indication 812. The frame buffer compression indication 812 may correspond with the frame buffer compression indication 620 mentioned hereinbefore in relation with the alternative video encoder 600 illustrated in FIG. 6 and, more specially, in relation with the alternative frame buffer assembly 604 therein, which is illustrated in FIG. 7

The decoder entropy decoding module 804 applies entropy decoding to the quantized-and-encoded version 810 of an intra/inter-defined transform domain frame. The entropy decoding is an inverse of the entropy coding that the entropy coding module 608 in the alternative video encoder 600 has applied. Accordingly, the decoder entropy decoding module 804 reproduces a quantized version 813 of the intra/inter-defined transform domain frame. This quantized version 813 may correspond with the quantized version 617 of the intra/inter-defined transform domain frame portion 615 in the alternative video encoder 600 illustrated in FIG. 6. The decoder dequantization module 805 carries out operations that corresponds with those carried out by the dequantization module 611 in the decoding chain 611-612 in the alternative video encoder 600. Accordingly, the decoder dequantization module 805 provides a dequantized version 814 of the intra/inter-defined transform domain frame portion.

The alternative decoder reconstruction module 806 provides a decoded transform domain frame portion 815 on the basis of the dequantized version 814 of the intra/inter-defined transform domain frame portion. In case the intra-mode has been applied to produce the encoded transform domain frame portion, the alternative decoder reconstruction module 806 may simply take the dequantized version 814 of the intra/interdefined transform domain frame portion as the decoded transform domain frame portion 815. In case the inter-mode has been applied for the transform domain frame portion, the alternative decoder reconstruction module 806 adds the dequantized version 814 of the intra/inter-defined transform domain frame portion to the corresponding portion in the representation 809 of the previously decoded frame in the transform domain that has served as a reference. This addition then produces the decoded transform domain frame portion 815.

Accordingly, by decoding the respective transform domain frame portions of the encoded frame as described hereinbefore, the alternative video decoder 800 produces a decoded frame in the transform domain. The inverse transform module 807 may then apply an inverse transform to the decoded frame in the transform domain so as to obtain a fully decoded frame, which forms part of the decoded sequence of frames 808. The inverse transform corresponds with an inverse of the linear transform that the linear transform module 605 in the alternative video encoder 600 has carried out, which has been described hereinbefore with reference to FIG. 6. Also, by decoding the respective transform domain frame portions of the encoded frame, respective decoded transform domain frame portions are obtained. These latter portions jointly constitute a decoded frame in the transform domain.

The alternative decoder frame buffer assembly 802 may provide a representation of the decoded frame in the transform domain, which may serve as a reference later on. Ideally, this representation corresponds with the representation that the alternative frame buffer assembly 604 has provided in the alternative video encoder 600 illustrated in FIG. 6. A satisfactory correspondence between the aforementioned representations that serve as references may be achieved, even a perfect correspondence may be achieved. This is thanks to the indication 620 on the lossy compression that the alternative frame buffer assembly 604 has applied, which is comprised in one or more frame buffer compression indications in the encoded sequence of frames 602.

FIG. 9 illustrates an embodiment of the alternative decoder frame buffer assembly 802 in the alternative video decoder 800. FIG. 9 provides a schematic block diagram of this embodiment, which will be referred to hereinafter as the alternative decoder frame buffer assembly 802 for the sake of convenience. The alternative decoder frame buffer assembly 802 comprises a data memory 901 and a controller 902, which will be referred to hereinafter as decoder buffer data memory 901 and decoder buffer controller 902, respectively, for the sake of distinctiveness.

Like the alternative frame buffer assembly 604 in the alternative video encoder 600, the alternative decoder frame buffer assembly 802 comprises various functional modules that may be regarded as constituting a buffer compression chain 903-904. These functional modules include a quantization module 903 and an entropy coding module 904. These will be referred to hereinafter as decoder buffer quantization module 903, and decoder buffer entropy coding module 904, respectively, for the sake of distinctiveness. For the same reason, the buffer compression chain 903-904 in the alternative decoder frame buffer assembly 802 will be referred to hereinafter as decoder buffer compression chain 903-904.

The alternative decoder frame buffer assembly 802 further comprises functional modules that may be regarded as constituting a buffer decompression chain 905-906: a decoder entropy decoding module 905 and a dequantization module 906. These will be referred to hereinafter as decoder buffer entropy decoding module 905 and decoder buffer dequantization module 905, respectively, for the sake of distinctiveness. For the same reason, the buffer decompression chain 905-906 in the alternative decoder frame buffer assembly 802 will be referred to hereinafter as decoder buffer decompression chain 905-906. The functional modules in the decoder buffer compression chain 903-904 and in the decoder buffer decompression chain 905-906 may each be implemented in the form of, for example, dedicated circuits, programmable circuits, or a suitably programmed processor, or any combination of these.

The alternative decoder frame buffer assembly 802 basically operates as follows. It is assumed that the alternative decoder frame buffer assembly 802 receives the decoded transform domain frame portion 815, which is provided by the alternative decoder reconstruction module 806 as described hereinbefore with reference to FIG. 8. Other decoded transform domain frame portions, which result from decoding other encoded transform domain frame portions, may be processed in a manner similar to that described hereinafter.

The decoder buffer controller 902 receives the frame buffer compression indication 812 that is included in the encoded transform domain frame portion, as mentioned hereinbefore. The decoder buffer controller 902 controls the decoder buffer quantization module 903 so that this module applies a quantization that is similar to the quantization in the buffer quantization module 704 of the alternative frame buffer assembly 604 illustrated in FIG. 7 This control may be similar to that described hereinbefore with regard to the buffer controller 702 in the alternative frame buffer assembly 604.

The decoder buffer entropy coding module 904 applies entropy coding to a quantization-compressed version 907 of the decoded transform domain frame portion 815 provided by the decoder buffer quantization module 903. This entropy coding may be similar to that applied by the buffer entropy coding module 705 in the alternative frame buffer assembly 604 illustrated in FIG. 5. A different entropy coding may also be applied. The decoder buffer entropy coding module 904 thus provides a quantization-and-coding-compressed version 908 of the decoded transform domain frame portion 815 received by the alternative decoder frame buffer assembly 802.

The quantization-and-coding-compressed version 908 of the decoded transform domain frame portion 815 provided by the decoder buffer compression chain 903-904 corresponds closely, or even exactly, with the compressed decoded transform domain frame portion 708 that has been provided by the buffer compression chain 703-705 in the alternative frame buffer assembly 604 in the alternative video encoder 600. This is thanks to the frame buffer compression indication 812 enabling the quantization in the decoder buffer compression chain 903-904 to closely, or even exactly, correspond with the quantization that has been applied in the buffer compression chain 703-705 in the alternative frame buffer assembly 604 in the alternative video encoder 600. The quantization-and-coding-compressed version 908 of the decoded transform domain frame portion 815 provided by the decoder buffer compression chain 903-904 will therefore be referred to hereinafter as similarly compressed decoded transform domain frame portion 908. The similarly compressed decoded transform domain frame portion 908 is sent to the decoder buffer data memory 901 for storage therein.

The decoder buffer decompression chain 905-906 in the alternative decoder frame buffer assembly 802 illustrated in FIG. 9 may carry out operations similar to those carried out by the buffer decompression chain 706-707 in the alternative frame buffer assembly 604 illustrated in FIG. 7. The alternative decoder frame buffer assembly 802 may thus provide a similarly decompressed decoded transform domain frame portion 909 on the basis of the similarly compressed decoded transform domain frame portion 908 that has been stored in the data memory 901. The similarly decompressed decoded transform domain frame portion 909 may correspond closely, or even exactly, with the decompressed decoded transform domain frame portion 709 that has been provided by the alternative frame buffer assembly 604 illustrated in FIG. 7. Again, this is thanks to the frame buffer compression indication 812 enabling the quantization, as well as the inverse quantization, in the alternative decoder frame buffer assembly 802 to correspond closely, or even exactly, with the quantization, as well as the inverse quantization, in the alternative frame buffer assembly 604 in the alternative video encoder 600.

Accordingly, the alternative decoder frame buffer assembly 802 may provide respective similarly decompressed decoded transform domain frame portion that jointly constitute a decompressed version of a previously decoded present frame in the transform domain. This decompressed version constitutes the representation of the previously decoded frame in the transform domain 809 that may serve, at least partially, as the reference for decoding a present encoded frame, which has been encoded in the inter-mode, at least partially. This reference may correspond closely, or even exactly, with the reference that has been used in the alternative video encoder 600 for producing the present encoded frame.

The embodiment described hereinbefore is another example of the frame buffer compression indication 812 enabling references in the alternative video decoder 800 to correspond with those that have been used in the alternative video encoder 600. Thanks to this, the references can be compressed to a relatively great extent, at least in the alternative video encoder 600, while ensuring satisfactory image quality. In turn, this allows a reduction in an amount of data that needs to temporarily stored, as well as a reduction in bandwidth required to write and to read the data to be temporarily stored. This, in turn, translates into a reduction in cost and power consumption.

### NOTES

The embodiments described hereinbefore with reference to the drawings are presented by way of illustration. The invention may be implemented in numerous different ways. In order to illustrate this, some alternatives are briefly indicated.
There are numerous different ways of implementing lossy compression in a frame buffer assembly in a video encoder in accordance with the invention. In the embodiments presented hereinbefore, the lossy compression is complemented with entropy coding and decoding. In other embodiments, entropy coding and decoding may be dispensed with. In the embodiments presented hereinbefore, the encoding chain in the frame buffer assembly comprises a delay buffer. In other embodiments, an encoding chain may not include a delay buffer. Also, there are many different ways of implementing lossy compression. For example, lossy compression may be achieved by deleting one or more least significant bits. This deletion, truncation, may be included in, for example, a GCLI coding. Also, lossy compression may be applied to blocks of pixels or transform samples that need not correspond in size with those used for video encoding and decoding.

There are numerous different ways of providing an indication on lossy compression that has been applied in a frame buffer assembly. In a very basic embodiment, the indication may be in the form of, for example, a flag that indicates whether lossy compression has been applied, or not. The lossy compression may be predefined so that the flag may enable a decoder to apply this predefined lossy compression, or an equivalent thereof. In another embodiment, in which quantization comprises truncation of binary sample values, the indication on the lossy compression may comprise respective truncation levels for respective portions in the decoded version of the previously encoded frame. In yet another embodiment, the indication may refer to information on quantization that has been applied for encoding a frame or a frame portion. Namely, lossy compression in a frame buffer assembly may be linked with the aforementioned quantization according to, for example, a predefined scheme or rule. In yet other embodiments, the indication may be in the form of, for example, a maximum memory bandwidth that is used for frame buffer compression, or a profile defining one or more memory bandwidths for frame buffer compression. Such a profile may be predefined, allowing a relatively simple indication.

There are numerous different ways of implementing a decoder that is compatible with a video encoder in accordance with the invention. Such a decoder does necessarily not have to store decoded frames that serve as references in a compressed form. The decoded frames may be stored "as is", uncompressed. It is sufficient to apply a processing to the decoded frames, when these are used as references, that imitates the lossy compression applied to the decoded frames in the video encoder. For example, a video decoder may be implemented by means of a software program running on a computer that has a relatively large memory capacity and a relatively large memory bandwidth allowing uncompressed storage of decoded frames. In such an implementation, the software program may then, on the basis of the indication on the lossy compression applied in the video encoder, provide the processing mentioned hereinbefore, thus ensuring that references used are the same, or at least sufficiently similar, in the video encoder and the video decoder.

There are numerous different ways of encoding a frame or a frame portion in the inter-mode. For example, several previously encoded frames may serve as a reference. In an embodiment, different frame portions of a same frame may be encoded with reference to frame portions in different frames among a set of previously encoded frames, which may each serve as a reference. In another embodiment, an interpolation between two or more previously encoded frame may serve as a reference.

In general, there are numerous different ways of implementing video encoding and video decoding in accordance with the invention. Any of the modules in the presented embodiments may be implemented by means of an electrical circuit, which may be dedicated or programmable, or by means of a suitably programmed processor, or a combination thereof. A computer program may define one or more operations that have been described with reference to the presented embodiments. In this respect, the schematic block diagrams of FIGS. 1, 2, 4-9 may each also be regarded, at least partially, as representing a flow chart diagram of such a computer program, as well as representing a method that a processor may carry out when executing the computer program. For example, the buffer control module 202 in the block diagram of FIG. 2 may be regarded as representing a buffer control step. Similarly, other modules may be regarded as representing steps of a method.

The remarks made hereinbefore demonstrate that the embodiments described with reference to the drawings illustrate the invention, rather than limit the invention. The invention can be implemented in numerous alternative ways that are within the scope of the appended claims. All changes that come within the meaning and range of equivalency of the claims are to be embraced within their scope. Any reference sign in a claim should not be construed as limiting the claim. The verb "comprise" in a claim does not exclude the presence of other elements or other steps than those listed in the claim. The same applies to similar verbs such as "include" and "contain". The mention of an element in singular in a claim pertaining to a product, does not exclude that the product may comprise a plurality of such elements. Likewise, the mention of a step in singular in a claim pertaining to a method does not exclude that the method may comprise a plurality of such steps. The mere fact that respective dependent claims define respective additional features, does not exclude combinations of additional features other than those reflected in the claims.

## Claims

1. A video encoder (100, 600) adapted to encode a sequence of frames (101, 601) so as to obtain an encoded sequence of frames (102, 602), the video encoder comprising:
- a frame buffer assembly (104, 604) adapted to provide, for a present frame to be encoded, a representation (115, 614) of a previously encoded frame, the representation resulting from lossy compression of a decoded version of the previously encoded frame; and
an encoding assembly (103, 603) adapted to encode the present frame at least partially with reference to the representation of the previously encoded frame;
- the video encoder being arranged to provide a data set comprising the encoded sequence of frames and including, in association with the previously encoded frame, an indication (124, 320, 620) on the lossy compression that has been applied for providing the representation thereof, which has served, at least partially, as a reference for encoding the present frame.

2. A video encoder according to claim 1, wherein the lossy compression is adaptable so that one portion of the decoded version of the previously encoded frame can be compressed to a greater extent than another portion of the decoded version of the previously encoded frame.

3. A video encoder according to any of claims 1 and 2, wherein the indication (124, 320, 620) on the lossy compression comprises an indication of a target amount of data to be obtained by the lossy compression of the decoded version of the previously encoded frame.

4. A video encoder according to claim 3, wherein the target amount of data relates to a fixed-sized portion of the representation of the previously encoded frame.

5. A video encoder according to any of claims 1 and 2, wherein the indication (124, 320, 620) on the lossy compression comprises at least one parameter defining quantization of samples in the decoded version of the previously encoded frame.

6. A video encoder according to claim 5, wherein the indication (124, 320, 620) on the lossy compression comprises a quantization step size.

7. A video encoder according to claim 6, wherein the indication (124, 320, 620) on the lossy compression comprises respective quantization step sizes for respective portions in the decoded version of the previously encoded frame.

8. A video encoder according to any of claims 5 to 7, wherein the quantization of the samples comprises a truncation of binary values, the indication (124, 320, 620) on the lossy compression comprising a truncation level indicating a number of least significant bits that have been discarded in the truncation.

9. A video encoder (600) according to any of claims 1 to 8, wherein the encoding assembly (602) comprises:
- a linear transform module (605) adapted to apply a linear transform to the present frame so as to provide the present frame in a transform domain;
- an inter-mode application module (606) adapted to provide a differential representation of a portion of the present frame in the transform domain, the differential representation corresponding with a difference between, on the one hand, the portion of the present frame in the transform domain and, on the other hand, a corresponding portion in the representation of the previously encoded frame in the transform domain; and
- a data compression module (607) adapted to apply data compression to the differential representation of the portion of the present frame in the transform domain,
- the frame buffer assembly (604) being adapted to apply the lossy compression to the decoded version of the previously encoded frame in the transform domain.

10. A video encoder according to claim 9, the video encoder being arranged to encode another portion of the present frame in the transform domain by applying the data compression directly to the other portion of the present frame in the transform domain.

11. A method of encoding a sequence of frames (101, 601) so as to obtain an encoded sequence of frames (102, 602), the method comprising:
- providing, for a present frame to be encoded, a representation (115, 614) of a previously encoded frame by lossy compression of a decoded version of the previously encoded frame; and
encoding the present frame at least partially with reference to the representation of the previously encoded frame;
- providing a data set comprising the encoded sequence of frames and including, in association with the previously encoded frame, an indication (124, 320, 620) on the lossy compression that has been applied for providing the representation thereof, which has served, at least partially, as a reference for encoding the present frame.

12. A computer program for a video encoder, the computer program comprising a set of instructions that enables the video encoder to carry out the method according to claim 11.

13. A data set (300) comprising:
- an encoded sequence of frames (102) comprising an encoded frame (304, 305) that has at least partially been encoded with reference to a representation of another previously encoded frame (303), the representation resulting from lossy compression of a decoded version of the other previously encoded frame; and
- an indication (320), in association with the other previously encoded frame, on the lossy compression that has been applied for providing the representation thereof, which has served, at least partially, as a reference for encoding the encoded frame.

14. A video decoder (400, 800) adapted to decode a sequence of encoded frames so as to obtain a decoded sequence of frames, the video decoder comprising:
- a frame buffer assembly (402, 802) adapted to provide, for an encoded frame to be decoded, a representation of a previously decoded frame; and
- a decoding assembly (401, 801) adapted to decode the encoded frame at least partially with reference to the representation of the previously decoded frame,
- the video decoder being arranged to retrieve from a data set, which comprises the sequence of encoded frames, an indication (124, 320, 620, 812) contained therein on lossy compression that has been applied by a frame buffer assembly in a video encoder that has produced the sequence of encoded frames; and
- the frame buffer assembly of the decoder being adapted to use the indication that has been retrieved from the data set for processing the previously decoded frame in a manner equivalent to the lossy compression applied by the frame buffer assembly in the video encoder, so as to obtain the representation that serves, at least partially, as a reference for decoding the present frame.

15. A decoder according to claim 14, wherein the decoder is adapted to set at least one parameter of the processing applied to the previously decoded frame in dependence of the indication (124, 320, 620, 812) on the lossy compression that has been applied by the frame buffer assembly in the video encoder.
